# EUROPÄISCHE PATENTSCHRIFT

(11) **EP 1 244 740 B1**
(45) Veröffentlichungstag und Bekanntmachung des Hinweises auf die Patenterteilung: **26.11.2003**
(21) Anmeldenummer: 00983291.6
(22) Anmeldetag: 12.12.2000
(51) Int. Cl.: C08K 13/02, C08L 69/00

(54) **FLAMMWIDRIGE POLYCARBONAT-FORMMASSEN MIT TALK BESONDERER REINHEIT**
FLAME-RESISTANT POLYCARBONATE MOLDING COMPOSITIONS CONTAINING HIGH-PURITY TALC
MATIERES MOULABLES A BASE DE POLYCARBONATE ININFLAMMABLES CONTENANT DU TALC D'UNE GRANDE PURETE

(30) Priorität: 24.12.1999 DE 19962930
(43) Veröffentlichungstag der Anmeldung: 02.10.2002
(73) Patentinhaber: Bayer Aktiengesellschaft, 51368 Leverkusen (DE)
(72) Erfinder: SEIDEL, Andreas, 41542 Dormagen (DE); ECKEL, Thomas, 41540 Dormagen (DE); ZOBEL, Michael, 40547 Düsseldorf (DE); DERR, Torsten, 41542 Dormagen (DE); WITTMANN, Dieter, 51375 Leverkusen (DE)
(86) Internationale Anmeldenummer: EP0012568
(87) Internationale Veröffentlichungsnummer: WO01048074

(56) Entgegenhaltungen:
- EP-A- 0 758 003
- EP-A- 0 884 366
- EP-A- 0 893 475
- DE-A- 19 753 542

## Beschreibung

Die vorliegende Erfindung betrifft mit Talk gefüllte Polycarbonat-Zusammensetzungen, die sich neben einer exzellenten Flammwidrigkeit auch bei kleinen Wandstärken durch eine verbesserte Rigidität, eine gute Spannungsrissbeständigkeit, d.h. Chemikalienbeständigkeit, sowie durch einen geringen Werkzeugabrieb und geringer Belagsbildung ("juicing") bei der Verarbeitung auszeichnen.

Gefüllte bzw. verstärkte PC/ABS-Formmassen sind bekannt.

In EP-A 0 391 413 werden zum Beispiel PC/ABS-Formmassen, enthaltend anorganische Füllstoffe mit speziellen geometrischen Eigenschaften beschrieben, wobei die Formmassen durch einen geringeren linearen thermischen Ausdehnungskoeffizienten, eine hohe Zähigkeit bei Stoßbeanspruchung sowie eine hohe Wärmeformbeständigkeit spezifiziert werden. Als erfindungsgemäße Füllstoffe werden Talk und nicht-kalzinierte Tonmaterialien beschrieben. Flammschutzmittel werden lediglich allgemein in einer Reihe von Zusatzstoffen erwähnt.

In EP-A 0 452 788 werden talkhaltige PC/ABS-Formmassen beschrieben, die sich besonders durch eine matte Materialoberfläche auszeichnen. Flammschutzmittel werden auch hier lediglich allgemein erwähnt.

Auch flammwidrig ausgerüstete, gefüllte bzw. verstärkte PC/ABS-Formmassen sind bereits bekannt.

In JP-A 0 219 9162 werden verstärkte, flammwidrige PC/ABS-Formmassen beschrieben, die mit einem halogenhaltigen Flammschutzmittel mit einem Halogengehalt von 0,5 - 15 Gew.-% ausgerüstet sind. Talk wird allgemein als möglicher Füllstoff erwähnt.

EP-A 0 363 608 und EP-A 0 640 655 befassen sich mit PC/ABS-Formmassen, die durch Oligophosphorsäureester bzw. Mischungen aus Oligo- und Monophosphorsäureester flammwidrig ausgerüstet sind. Es wird allgemein erwähnt, dass die Formmassen Verstärkungsmaterialien enthalten können. Beispiele verstärkter Formmassen werden jedoch nicht offenbart.

In WO 99/07778 werden verstärkte, mit organischen Phosphorverbindungen flammwidrig ausgerüstete PC/ABS-Formmassen beschrieben, deren Polycarbonatanteil ein Gemisch zweier aromatischer Polycarbonate mit unterschiedlicher Lösungsviskosität darstellt. Als Verstärkungsstoff wird ausschließlich der Einsatz von Glasfasern anhand von Beispielen demonstriert. Diese führen zu einem unerwünschten Werkzeugabrieb bei der Verarbeitung der Formmasse. Die WO 99/07778 lehrt, dass bei Verwendung bestimmter Gemische von Polycarbonaten unterschiedlicher Viskositäten PC/ABS-Formmassen mit besseren E-Modul, Kerbschlagzähigkeit und Verarbeitungsverhalten erhalten werden.

In EP-A 0 754 531 wird darauf hingewiesen, dass der Einsatz von faserförmigen Füllstoffen mit einem großen L/D-Verhältnis zu Produkten mit anisotropen Eigenschaften (Zugfestigkeit, Steifigkeit, linearer thermischer Ausdehnungskoeffizient, Schrumpfungsverhältnis) führt, was oft unerwünschte Folgen wie Verzug, Deformation bei Erwärmung, etc. nach sich zieht. Es wird eine PC/ABS-Formmasse beschrieben, welche durch Einsatz von speziellen Oligophosphorsäureestern flammwidrig ausgerüstet und durch einen Füllstoff mit Blättchenstruktur verstärkt ist. Speziell werden Beispiele mit Glasschuppen, Micas und Mischungen daraus als Füllstoff offenbart. Talk wird nicht explizit als Füllstoff genannt. EP-A 754 531 lehrt, dass die beschriebenen Formmassen sich durch geringe Deformation bei Temperaturschwankungen auszeichnen, was einen Einsatz für Hochpräzisionsteile ermögliche. Des weiteren werden als Vorteile eine geringe Neigung zum Ausbluten des Flammschutzmittels sowie zur Belagsbildung im Spritzgusswerkzeug genannt.

In JP-A 0 731 6411 werden PC/ABS-Formmassen beschrieben, die als Flammschutzmittel 1 - 30 % eines aromatischen Monophosphats und als Füllstoff 1 - 20 % eines kalzinierten Talks mit einem mittleren Partikeldurchmesser von 2 µm oder kleiner enthalten. Die Formmassen zeichnen sich durch gute Verarbeitbarkeit, Zähigkeit und Wärmeformbeständigkeit sowie einen exzellenten Flammschutz aus. Die Erfahrung lehrt jedoch, dass Monophosphate zum Ausbluten sowie zur unerwünschten Bildung von Werkzeugbelägen bei der Spritzgussverarbeitung neigen.

US-A 5,849,827 und WO 99/07788 offenbaren flammwidrige thermoplastische Formmassen, basierend auf Polycarbonat, die feinst verteilte anorganische Pulver enthalten. Talk wird nicht erwähnt. Es wird beschrieben, dass durch den Zusatz der feinverteilten anorganischen Pulver die Nachbrennzeiten bei 1,6 mm nach UL 94 V und damit die Flammschutzeigenschaften verbessert werden.

Aufgabe der vorliegenden Erfindung ist die Verbesserung der Flammwidrigkeit (Verringerung der Nachbrennzeiten und Abtropfneigung im UL 94 V-Test) bei dünnen Wandstärken, insbesondere bei 1,5 mm und kleiner, bei gleichzeitiger Erhöhung der Materialsteifigkeit, die bei dünnwandigen Formteilen besonders wichtig ist. Weiterhin sollen die Formmassen eine gute Spannungsrissbeständigkeit, gute Hydrolysebeständigkeit, eine geringe Verzugsneigung, gute Fließfähigkeit, Wärmeformheständigkeit und Zähigkeit, sowie bei der Verarbeitung einen vemachlässigbaren Werkzeugabrieb und eine vernachlässigbare Belagsbildung durch Ausbluten des Flammschutzmittels bei der Verarbeitung aufweisen.

Es wurde nun gefunden, dass schlagzähmodifizierte Polycarbonat-Zusammensetzungen, die den unten beschriebenen speziellen Talk enthalten, die gewünschten Eigenschaften aufweisen. Das Eigenschaftsprofil der erfindungsgemäßen Zusammensetzungen ermöglicht insbesondere einen Einsatz zur Herstellung von dünnwandigen Formteilen, insbesondere für Anwendungen, die einen sicheren Flammschutz erfordern.

Gegenstand der vorliegenden Erfindung sind somit Polycarbonat-Zusammensetzungen enthaltend Schlagzähmodifikator, mindestens ein phosphorhaltiges Flammschutzmittel und

0,05 bis 40, vorzugsweise 0,5 bis 30 Gew.-Teile, besonders bevorzugt 1 bis 20 Gew.-Teile bezogen auf die Gesamtzusammensetzung eines speziellen hochreinen Talks mit einem MgO-Gehalt von 28 bis 35 Gew.-%, bevorzugt von 30 bis 33, besonders bevorzugt 30,5 bis 32 Gew.-% sowie einem SiO₂-Gehalt von 55 bis 65 Gew.-%, bevorzugt von 58 bis 64 Gew.-%, besonders bevorzugt 60 bis 62,5 Gew.-%, jeweils bezogen auf den Talk.

Besonders bevorzugte Talktypen zeichnen sich des Weiteren durch einen Al₂O₃-Gehalt von kleiner als 5 Gew.-%, insbesondere kleiner als 1 Gew.-%, besonders kleiner als 0,7 Gew.-% bezogen auf den Talk, aus.

Bevorzugt sind Polycarbonat-Zusammensetzungen enthaltend
A) 40 bis 98 Gew.-Teile, vorzugsweise 45 bis 95 Gew.-Teile, besonders bevorzugt 50 bis 90 Gew.-Teile mindestens eines aromatischen Polycarbonats,
B) 0,5 bis 50, vorzugsweise 1 bis 35, besonders bevorzugt 1,5 bis 25 Gew.-Teile mindestens eines Pfropfpolymerisats,
C) 0,5 bis 40, insbesondere 2 bis 20 Gew.-Teile mindestens eines Phosphor-haltigen Flammschutzmittels,
D) 0,05 bis 40, insbesondere 0,5 bis 30 Gew.-Teile, besonders bevorzugt 1 bis 20 Gew.-Teile eines Talks gemäß obiger Definition.

Die Summe der Gewichtsteile aller Komponenten (A bis D sowie gegebenenfalls weiterer Bestandteile) ergibt dabei 100.

Ganz besonders bevorzugte Polycarbonat-Zusammensetzungen zeichnen sich insbesondere dadurch aus, dass sie bei Wandstärken kleiner oder gleich 1,5 mm, vorzugsweise bei Wandstärken von 1,2 mm oder kleiner, den UL 94V-Test mit der Bewertung V-O bestehen.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 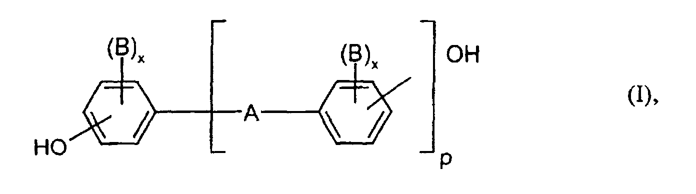 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (II) oder (III) 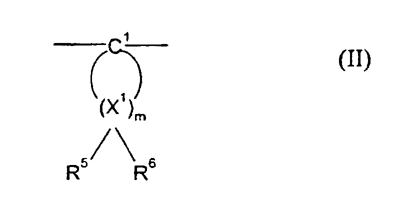 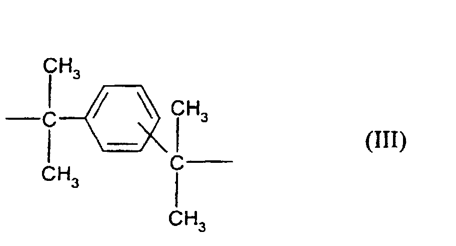
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kembromierte und/oder kemchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10 000 bis 200 000, vorzugsweise 15 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrecher auf Mole Dicarbonsäuredichloride.

Die aromatischen Polyestercarbonate können auch aromatische Hydroxycarbonsäurcn eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten, 2,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die Komponente B umfasst ein oder mehrere Pfropfpolymerisate von
- B.1: 5 bis 95, vorzugsweise 30 bis 90 Gew.-%, wenigstens eines Vinylmonomeren auf
- B.2: 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße (d₅₀-Wert) von 0,05 bis 10 µm, vorzugsweise 0, 1 bis 5 µm, besonders bevorzugt 0,2 bis 1 µm.

Monomere B. 1 sind vorzugsweise Gemische aus
- B.1.1: 50 bis 99 Gew.-Teilen Vinylaromaten und/oder kemsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
- B.1.2: 1 bis 50 Gew.-Teilen Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb <10°C, vorzugsweise <0°C, besonders bevorzugt <-10°C liegt.

Besonders bevorzugt ist reiner Polybutadienkautschuk.

Besonders bevorzugte Polymerisate B sind z.B. ABS-Polymerisate (Emulsions-, Masse- und Suspensions-ABS), wie sie z. B. in der DE-OS 2 035 390 (=US-PS 3 644 574) oder in der DE-OS 2 248 242 (=GB-PS 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente C

Phosphorhaltige Flammschutzmittel im erfindungsgemäßen Sinne sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte Phosphorverbindungen können alleine oder in beliebiger Kombination mit anderen Phosphorverbindungen eingesetzt werden.

Bevorzugt werden halogenfreie Phosphorverbindungen eingesetzt.

Bevorzugte Mono- und oligomere Phosphor- bzw. Phosphonsäureester sind Phosphorverbindungen der allgemeinen Formel (IV) 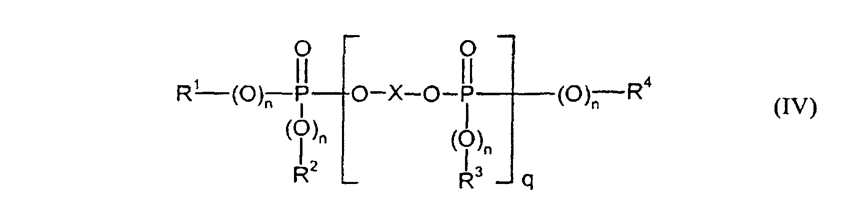 worin
- R¹, R², R³ und R⁴,: unabhängig voneinander jeweils gegebenenfalls halogeniertes C₁- bis C₈-Alkyl, jeweils gegebenenfalls durch Alkyl, vorzugsweise C₁-C₄-Alkyl, und/oder Halogen, vorzugsweise Chlor, Brom, substituiertes C₅- bis C₆- Cycloalkyl, C₆- bis C₂₀-Aryl oder C₇- bis C₁₂-Aralkyl,
- n: unabhängig voneinander, 0 oder 1
- q: 0 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁-C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁-C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (IV) bedeutet bevorzugt einen ein- oder mehrkemigen aromatischen Rest mit 6 bis 30 C-Atomen. Dieser leitet sich bevorzugt von Diphenolen der Formel (I) ab.
- n: in der Formel (IV) kann, unabhängig voneinander, 0 oder 1 sein, vorzugsweise ist n gleich 1.
- q: steht für Werte von 0 bis 30. Bei Einsatz von Mischungen verschiedener Komponenten der Formel (IV) können diese Mischungen vorzugsweise zahlen-gemittelte q-Werte von 0,3 bis 20, besonders bevorzugt von 0,5 bis 10, insbesondere von 0,5 bis 6 besitzen.
- X: steht besonders bevorzugt für 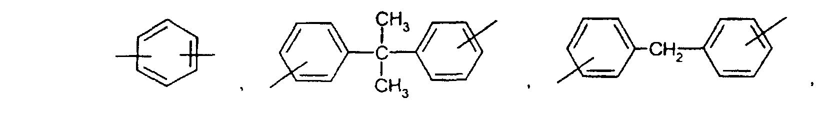 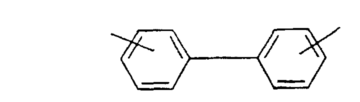 oder deren chlorierte oder bromierte Derivate, insbesondere leitet sich X von Resorcin, Hydrochinon, Bisphenol A oder 4,4'-Dihydroxydiphenyl ab. Besonders bevorzugt leitet sich X von Bisphenol A ab.

Als besonders vorteilhaft erweist sich der Einsatz von oligomeren Phosphorsäureestern der allgemeinen Formel (IVa) 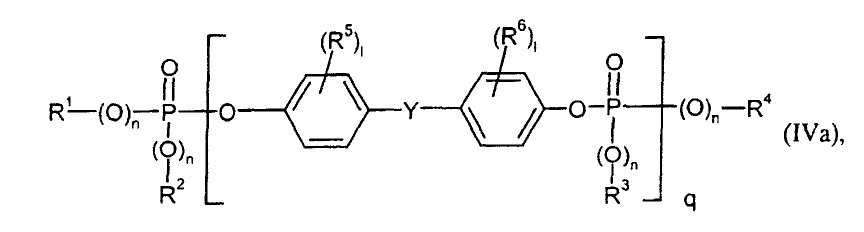 worin
- R¹, R², R³, R⁴: und n die oben angegebene Bedeutung haben,
- l: unabhängig voneinander 0, 1, 2, 3 oder 4, vorzugsweise 0, 1 oder 2,
- q: 0,3 bis 20, bevorzugt 0,5 bis 10, insbesondere 0,5 bis 6,
- R⁵ und R⁶: unabhängig voneinander C₁-C₄-Alkyl, vorzugsweise Methyl und
- Y: C₁-C₇-Alkyliden, C₁-C₇-Alkylen, C₅-C₁₂-Cycloalkylen, C₅-C₁₂-Cycloalkyliden, -O-, -S-, -SO-, SO₂ oder -CO-, vorzugsweise C₁-C₇-Alkyliden, insbesondere Isopropyliden oder Methyl bedeuten.

Mit derartigen Phosphorverbindungen ausgerüstete Zusammensetzungen weisen eine besonders hohe Spannungsriss- und Hydrolysebeständigkeit sowie eine besonders geringe Neigung zur Belagsbildung bei der Spritzgussverarbeitung auf. Des weiteren lässt sich mit diesen Flammschutzmitteln eine besonders hohe Wärmeformbeständigkeit erzielen.

Besonders bevorzugt ist der Einsatz von solchen Verbindungen der allgemeinen Formel (IVa), die sich vom Bisphenol-A ableiten.

Als erfindungsgemäße Komponente C können Monophosphate (q=O), Oligophosphate (q=1-30) oder Mischungen aus Mono- und Oligophosphaten eingesetzt werden.

Monophosphorverbindungen der Formel (IV) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid.

Die Phosphorverbindungen gemäß Komponente C. Formel (IV) sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Phosphonatamine sind vorzugsweise Verbindungen der Formel (V)

A_{3-y}-NB¹ _{y} (V)

in welcher
- A: für einen Rest der Formel (Va) 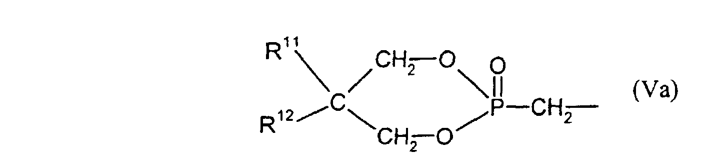 oder (Vb) 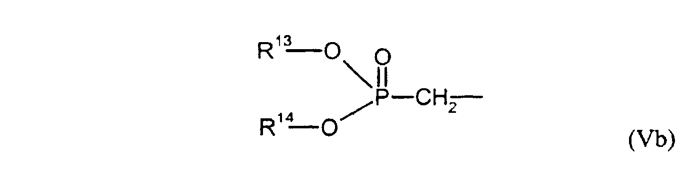 steht,
- R¹¹ und R¹²: unabhängig voneinander für unsubstituiertes oder substituiertes C₁-C₁₀ -Alkyl oder für unsubstituiertes oder substituiertes C₆-C₁₀-Aryl, stehen,
- R¹³ und R¹⁴: unabhängig voneinander für unsubstituiertes oder substituiertes C₁-C₁₀ -Alkyl oder unsubstituiertes oder substituiertes C₆-C₁₀-Aryl stehen oder
- R¹³ und R¹⁴: zusammen für unsubstituiertes oder substituiertes C₃-C₁₀-Alkylen stehen,
- y: die Zahlenwerte 0, 1 oder 2 bedeuten und
- B¹: unabhängig für Wasserstoff, gegebenenfalls halogeniertes C₂-C₈-Alkyl, unsubstituiertes oder substituiertes C₆-C₁₀-Aryl steht.
- B¹: steht vorzugsweise unabhängig für Wasserstoff, für Ethyl, n- oder iso-Propyl, welche durch Halogen substituiert sein können, unsubstituiertes oder durch C₁-C₄-Alkyl und/oder Halogen substituiertes C₆-C₁₀-Aryl, insbesondere Phenyl oder Naphthyl.

Alkyl in R¹¹, R¹², R¹³ und R¹⁴ steht unabhängig vorzugsweise für Methyl, Ethyl, n-Propyl, iso-Propyl, n-, iso-, sec. oder tert. Butyl, Pentyl oder Hexyl.

Substituiertes Alkyl in R¹¹, R¹², R¹³ und R¹⁴ steht unabhängig vorzugsweise für durch Halogen substituiertes C₁-C₁₀-Alkyl, insbesondere für ein- oder zweifach substituiertes Methyl, Ethyl, n-Propyl, iso-Propyl, n-, iso-, sec. oder tert.-Butyl, Pentyl oder Hexyl.

C₆-C₁₀-Aryl steht in R¹¹, R¹², R¹³ und R¹⁴ unabhängig vorzugsweise für Phenyl, Naphthyl oder Binaphthyl, insbesondere o-Phenyl, o-Naphthyl, o-Binaphthyl, welche durch Halogen (im allgemeinen ein-, zwei- oder dreifach) substituiert sein können.

R¹³ und R¹⁴ können zusammen mit den Sauerstoffatomen, an die sie direkt gebunden sind, und dem Phosphoratom eine Ringstruktur bilden.

Beispielhaft und vorzugsweise werden genannt: 5,5,5',5',5",5"-Hexamethyltris-(1,3,2-dioxaphosphorinan-methan)amino-2,2',2"-trioxid der Formel (Va-1) 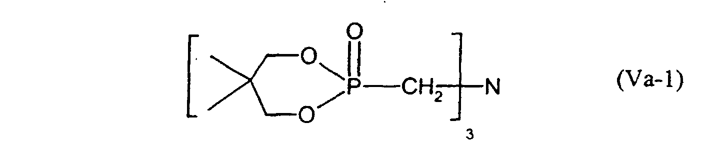 (Versuchsprodukt XPM 1000 Fa. Solutia Inc., St. Louis, USA)

1,3,2-Dioxaphosphorinan-2-methanamin, N-butyl-N[(5,5-dimethyl-1,3,2-dioxaphosphorinan-2-yl)methyl)-5,5-dimethyl-, P,2-dioxide; 1,3,2-Dioxaphosphorinane-2-methanamin, N-[[5,,5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-di-chloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-dichloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

### Bevorzugt sind weiterhin:

Verbindungen der Formel (Va-2) oder (Va-3) 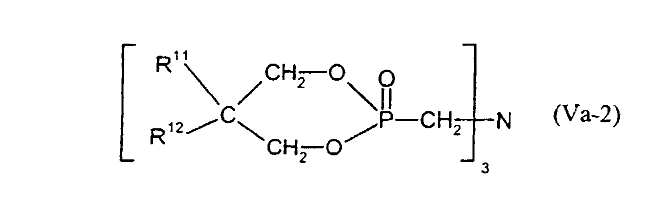 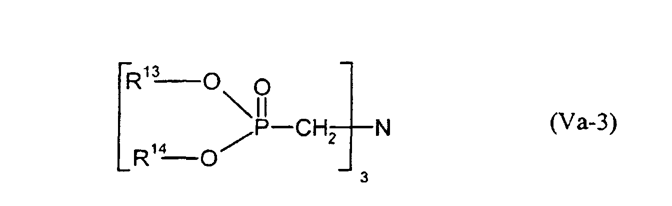 wobei

R¹¹, R¹², R¹³ und R¹⁴ die oben angegebenen Bedeutungen haben.

Besonders bevorzugt sind Verbindungen der Formel (Va-2) und (Va-1).

Die Herstellung der Phosphonatamine ist beispielsweise in US-Patentschrift 5,844,028 beschrieben.

Phosphazene sind Verbindungen der Formeln (VIa) und (VIb) 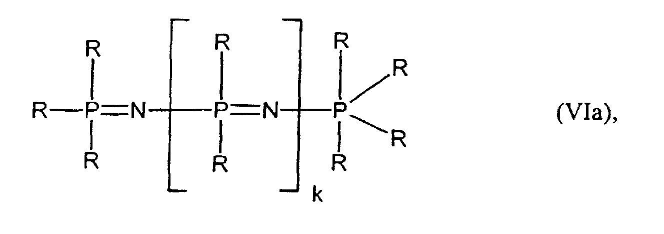 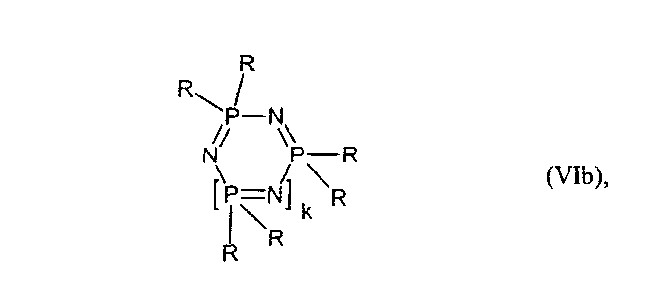 worin
- R: jeweils gleich oder verschieden ist und für Amino, jeweils gegebenenfalls halogeniertes, vorzugsweise mit Fluor halogeniertes C₁- bis C₈-Alkyl, oder C₁- bis C₈- Alkoxy, jeweils gegebenenfalls durch Alkyl, vorzugsweise C₁-C₄-Alkyl, und/oder Halogen, vorzugsweise Chlor und/oder Brom, substituiertes C₅- bis C₆-Cycloalkyl, C₆- bis C₂₀-Aryl, vorzugsweise Phenyl oder Naphthyl, C₆- bis C₂₀-Aryloxy, vorzugsweise Phenoxy, Naphthyloxy, oder C₇- bis C₁₂-Aralkyl, vorzugsweise Phenyl-C₁-C₄-alkyl, steht,
- k: für 0 oder eine Zahl von 1 bis 15, vorzugsweise für eine Zahl von 1 bis 10 steht.

### Beispielhaft seien genannt:

Propoxyphosphazen, Phenoxyphosphazen, Methylphenoxyphosphazen, Aminophosphazen und Fluoralkylphosphazene.

### Bevorzugt ist Phenoxyphosphazen.

Die Phosphazene können allein oder als Mischung mit anderen phosphorhaltigen Flammschutzmitteln eingesetzt werden. Der Rest R kann immer gleich sein oder 2 oder mehr Reste in den Formeln (VIa) und (VIb) können verschieden sein.

Phosphazene und deren Herstellung sind beispielsweise in EP-A 728 811, DE-A 1 961668 und WO 97/40092 beschrieben.

Die Flammschutzmittel können allein oder in beliebiger Mischung untereinander oder in Mischung mit anderen Flammschutzmitteln eingesetzt werden.

### Komponente D

Unter Talk wird ein natürlich vorkommender oder synthetisch hergestellter Talk verstanden.

Reiner Talk hat die chemische Zusammensetzung 3 MgO·4SiO₂·H₂O und somit einen MgO-Gehalt von 31,9 Gew.-%, einen SiO₂-Gehalt von 63,4 Gew.-% und einen Gehalt an chemisch gebundenem Wasser von 4,8 Gew.-%. Es handelt sich um ein Silikat mit Schichtstruktur.

Natürlich vorkommende Talkmaterialien besitzen im allgemeinen nicht die oben aufgeführte Idealzusammensetzung, da sie durch partiellen Austausch des Magnesiums durch andere Elemente, durch partiellen Austausch von Silizium, durch z.B. Aluminium und/oder durch Verwachsungen mit anderen Mineralien wie z.B. Dolomit, Magnesit und Chlorit verunreinigt sind.

Die speziellen Talksorten im erfindungsgemäßen Sinne zeichnen sich aus durch eine besonders hohe Reinheit, gekennzeichnet durch einen MgO-Gehalt von 28 bis 35 Gew.-%, bevorzugt 30 bis 33 Gew.-%, besonders bevorzugt 30,5 bis 32 Gew.-% und einen SiO₂-Gehalt von 55 bis 65 Gew.-%, bevorzugt 58 bis 64 Gew.-%, besonders bevorzugt 60 bis 62,5 Gew.-%. Bevorzugte Talktypen zeichnen sich des Weiteren durch einen Al₂O₃-Gehalt von kleiner als 5 Gew.-%, besonders bevorzugt kleiner als 1 Gew.-%, insbesondere kleiner als 0,7 Gew.-%, aus.

Kommerziell verfügbare Talktypen, die dieser Definition entsprechen, sind z.B. Naintsch A3, A7, A10, A30 und Naintsch Prever M30 der Firma Naintsch Mineralwerke GmbH (Graz, Österreich) sowie die Typen Finntalc MO5SL, MO3 und M20SL, die durch die Firma Omya GmbH (Köln) vertrieben werden.

Talktypen im nicht erfindungsgemäßen Sinne sind z.B. Naintsch SE-Standard, Naintsch SE-Super, Naintsch SE-Micro sowie Naintsch ST 10, 15, 20, 30 und 60, die allesamt von der Firma Naintsch Mineralwerke GmbH vertrieben werden.

Vorteilhaft ist insbesondere der Einsatz des erfindungsgemäßen Talkes in Form von feinvermahlenen Typen mit einer mittleren größten Teilchengröße d₅₀ von <20 µm, bevorzugt <10 µm, besonders bevorzugt <5 µm, ganz besonders bevorzugt ≤2,5 µm. Durch Einsatz solch feiner Talktypen wird insbesondere eine verbesserte (Kerb-)Schlagzähigkeit erzielt, ohne dass die übrigen Eigenschaften (Flammwidrigkeit, Steifigkeit, Fließverhalten, Spannungsrissbeständigkeit, etc.) darunter leiden.

Der Talk kann oberflächenbehandelt, z.B. silanisiert sein, um eine bessere Verträglichkeit mit dem Polymer zu gewährleisten. Im Hinblick auf die Verarbeitung und Herstellung der Formmassen ist auch der Einsatz kompaktierter Talks vorteilhaft.

### Weitere Zusatzstoffe E

Als Antitropfinittel können die erfindungsgemäßen Zusammensetzungen vorzugsweise fluorierte Polyolefine E.1 bis zu 3 Gew.-Teilen, vorzugsweise 0,01 bis 1 Gew.-Teil, bezogen auf die gesamte Zusammensetzung enthalten.

Fluorierte Polyolefine sind allgemein bekannt (vgl. z.B. EP-A 640 655). Ein handelsübliches Produkt ist beispielsweise Teflon® 30 N von der Firma DuPont.

Die fluorierten Polyolefine können auch in Form einer koagulierten Mischung von Emulsionen der fluorierten Polyolefine mit Emulsionen der Pfropfpolymerisate B) oder einer Emulsion eines Copolymerisats vorzugsweise auf Styrol/Acrylnitril-Basis eingesetzt werden, wobei das fluorierte Polyolefin als Emulsion mit einer Emulsion des Pfropfpolymerisats bzw. Copolymerisats gemischt und anschließend koaguliert wird.

Weiterhin können die fluorierten Polyolefine als Präcompound mit dem Pfropfpolymerisat B oder einem Copolymerisat auf vorzugsweise Styrol/Acrylnitril-Basis eingesetzt werden. Die fluorierten Polyolefine werden als Pulver mit einem Pulver oder Granulat des Pfropfpolymerisats bzw. Copolymerisats vermischt und in der Schmelze im allgemeinen bei Temperaturen von 208 bis 330°C in üblichen Aggregaten wie Innenknetem, Extrudern oder Doppelwellenschnecken compoundiert.

Die fluorierten Polyolefine können auch in Form eines Masterbatches eingesetzt werden, welcher durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und Mischungen daraus. Das Polymerisat wird nach saurer Fällung und nachfolgender Trocknung als rieselfähiges Pulver eingesetzt.

Die Koagulate, Präcompounds bzw. Masterbatches besitzen üblicherweise Feststoffgehalte an fluoriertem Polyolefin von 5 - 95 Gew.-%, vorzugsweise 7 bis 60 Gew.-%.

Die erfindungsgemäßen Zusammensetzungen können auch weitere Polymere enthalten.

Geeignet sind bevorzugt Vinyl(co)Polymerisate (E.2) von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- E.2.1: 50 bis 99, vorzugsweise 60 bis 90 Gew.-Teilen Vinylaromaten und/oder kemsubstituierten Vinylaromaten wie beispielsweise Styrol, α-Methylstyrol, p-Methylstyrol, p-Chlorstyrol) und/oder Methacrylsäure-(C₁-C₈)-Alkylester wie z.B. Methylmethacrylat, Ethylmethacrylat), und
- E.2.2: 1 bis 50, vorzugsweise 10 bis 40 Gew.-Teilen Vinylcyanide (ungesättigte Nitrile) wie Acrylnitril und Methacrylnitril und/oder (Meth)Acrylsäure-(C₁-C₈)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate E.2 sind harzartig, thermoplastisch und kautschukfrei.

Besonders bevorzugt ist das Copolymerisat aus E.2.1 Styrol und E.2.2 Acrylnitril.

Die (Co)Polymerisate gemäß E.2 sind bekannt und lassen sich durch radikalische Polymerisation, insbesondere durch Emulsions-, Suspensions-, Lösungs- oder Massepolymerisation herstellen. Die (Co)Polymerisate gemäß Komponente E.2 besitzen vorzugsweise Molekulargewichte M_{w} (Gewichtsmittel, ermittelt durch Lichtstreuung oder Sedimentation) zwischen 15 000 und 200 000.

Geeignet sind weiterhin Polyalkylenterephthalate (E.3) wie sie in EP-A-841 187 beschrieben sind.

Bevorzugt sind Polyalkylenterephthalate, die aus Terephthalsäure und/oder deren reaktionsfähigen Derivaten (z.B. deren Dialkylestern) und Ethylenglykol und/oder Butandiol-1,4 hergestellt worden sind, und Mischungen dieser Polyalkylenterephthalate.

Vorzugsweise enthalten die erfindungsgemäßen Zusammensetzungen Vinyl(co)polymerisate, Polyalkylenterephthalate oder Mischungen hieraus bis zu einer Menge von 30, vorzugsweise bis 15 Gew.-%, bezogen auf die Gesamt-Zusammensetzung.

Die erfindungsgemäßen Formmassen können wenigstens ein weiteres der üblichen Additive, wie z.B. Antitropfinittel, Gleit- und Entformungsmittel, Nukleiermittel, Antistatika, Stabilisatoren, Farbstoffe und Pigmente sowie von Talk verschiedene Füll- und Verstärkungsstoffe enthalten.

Die erfindungsgemäßen Formmassen enthaltend die obengenannten Komponenten und gegebenenfalls Zusätze, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert oder schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen thermoplastischen Formmassen eignen sich aufgrund ihrer ausgezeichneten Flammwidrigkeit sowie ihrer guten weiteren Eigenschaften wie z.B. ESC-Verhalten (Spannungsrissbeständigkeit), Steifigkeit, Wärmeformbeständigkeit, Fließfähigkeit und Verzugsarmut zur Herstellung von Formkörpern jeglicher Art, insbesondere von dünnwandigen Teilen mit erhöhten Anforderungen an die Flammwidrigkeit.

Die Formkörper können z.B. durch Spritzguss oder Extrusion hergestellt werden. Beispiele für herstellbare Formkörper sind: Gehäuseteile jeder Art, z.B. für Haushaltsgeräte wie Saftpressen, Kaffeemaschinen, Mixer; für Büromaschinen, wie Monitore, (tragbare) Computer, Drucker und Kopierer. Weitere mögliche Einsatzgebiete sind Abdeckplatten und Elektroinstallationskanäle für den Bausektor sowie Teile für den Kfz-Sektor. Die Formmassen sind außerdem auf dem Gebiet der Elektrotechnik z.B. für Schalter, Steckdosen und Platinen einsetzbar.

Gegenstand der Erfindung sind ebenfalls Verfahren zur Herstellung der Zusammensetzung, Verwendung der Zusammensetzung zur Herstellung von Formkörpern sowie die Formkörper selbst.

### Beispiele

### Komponente A-1

Polycarbonat auf Basis Bisphenol A mit einer relativen Lösungsviskosität von 1,28, gemessen in Methylenchlorid bei 25°C und in einer Konzentration von 0,5 g/100 ml.

### Komponente A-2

Wie Komponente A-1, jedoch mit einer relativen Lösungsviskosität von 1,20.

### Komponente A-3

Wie Komponente A-1, jedoch mit einer relativen Lösungsviskosität von 1,25.

### Komponente B-1

Pfropfpolymerisat, hergestellt durch Emulsionspolymerisation, von 45 Gew.-Teilen Styrol und Acrylnitril im Verhältnis von 72:28 auf 55 Gew.-Teilen eines teilchenförmigen vernetzten Polybutadienkautschuks (mittlerer Teilchendurchmesser d₅₀ = 0,3 bis 0,4 µm).

### Komponente B-2

Pfropfpolymerisat aus 83 Gew.-Teilen eines Copolymerisats aus Styrol und Acrylnitril im Verhältnis von 75,5 auf 24,5 Gew.-Teile vernetzten Polybutadienstyrol-Kautschuk mit 10 % Styrol-Anteil, hergestellt durch Massepolymerisation. (mittlerer Teilchendurchmesser d₅₀ = 0,5 µm).

### Komponente C

### C.1 Bisphenol-A-basierendes Phosphat

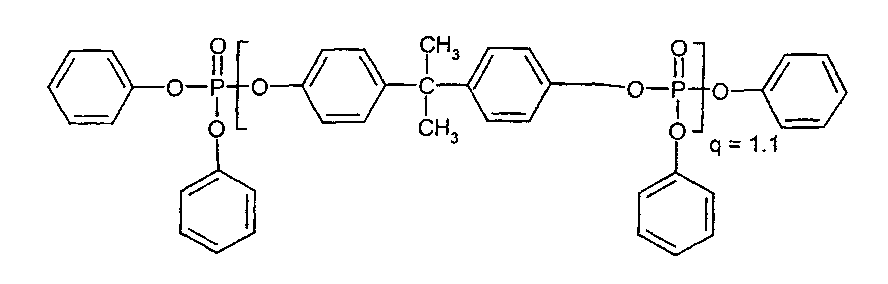

### C.2 Resorcinol -basierendes Phosphat

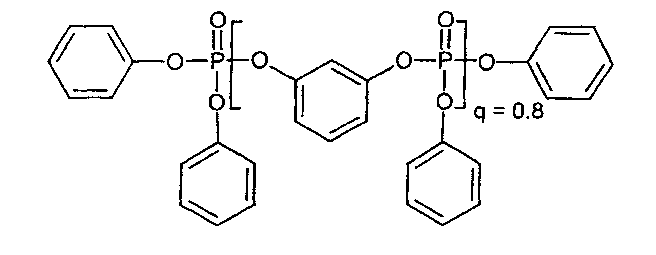

Zur Bestimmung des mittleren q-Wertes wurden zuerst die Anteile der oligomeren Phosphate durch HPLC-Messungen bestimmt:

| | |
|---|---|
| Säulentyp | LiChrosorp RP-8 |
| Elutionsmittel im Gradienten | Acetonitril/Wasser 50:50 bis 100:0 |
| Konzentration | 5 mg/ml |

Aus den Anteilen der einzelnen Komponenten (Mono- und Oligophosphate) wurden dann nach bekannten Verfahren die zahlengewichteten Mittelwerte berechnet.

### Komponente D

- D1:: Naintsch Prever M30, Talk der Firma Naintsch Mineralwerke GmbH (Graz, Österreich) mit einem MgO-Gehalt von 31,2 Gew.-%, einem SiO₂-Gehalt von 62,5 Gew.-% und einem Al₂O₃-Gehalt von 0,7 Gew.-%.
- D2:: Finntalc M05SL, Talk der Firma Mondo Minerals Oy (Helsinki, Finnland), vertrieben durch die Firma Omya GmbH (Köln) mit einem MgO-Gehalt von 31 Gew.-%, einem SiO₂-Gehalt von 61 Gew.-%, und einem Al₂O₃-Gehalt von 0,3 Gew.-%.
- D3:: Finntalc M20SL, Talk der Firma Mondo Minerals Oy mit einem MgO-Gehalt von 31 Gew.-%, einem SiO₂-Gehalt von 61 Gew.-% und einem Al₂O₃-Gehalt von 0,3 Gew.-%.
- D4:: Naintsch A3, Talk der Firma Naintsch Mineralwerke GmbH mit einem MgO- Gehalt von 31,5 Gew.-%, einem SiO₂-Gehalt von 62,0 Gew.-% und einem Al₂O₃-Gehalt von 0,4 Gew.-%.
- D5:: Naintsch SE-Super, Talk der Firma Naintsch Mineralwerke GmbH mit einem MgO-Gehalt von 22 Gew.-% und einem SiO₂-Gehalt von 17 Gew.-%. Al₂O₃ wurde nicht nachgewiesen.
- D6:: Naintsch ST10, Talk der Firma Naintsch Mineralwerke GmbH mit einem MgO-Gehalt von 30 Gew.-%, einem SiO₂-Gehalt von 48 Gew.-% und einem Al₂O₃-Gehalt von 10,5 Gew.-%.

Bei den angegebenen chemischen Zusammensetzungen handelt es sich um Herstellerangaben. Die Analytik erfolgt nach literaturbekannten Methoden (z.B. durch Röntgenfluoreszenzspektroskopie oder Atomadsorptionsspektroskopie oder Kalorimetrie).

### Komponente E-1

Die Polytetrafluorethylen-Emulsion wird hergestellt durch Cofällung einer Mischung wässriger Emulsionen des Pfropfpolymerisats (Komponente B) und eines Tetrafluorethylenpolymerisats. Das Gewichtsverhältnis Pfropfpolymerisat B zum Tetrafluorethylenpolymerisat E im Koagulat ist 90 Gew.-% zu 10 Gew.-%. Die Tetrafluorethylenpolymerisat-Emulsion besitzt einen Feststoffgehalt von 60 Gew.-%, der mittlere PTFE-Teilchendurehmesser liegt zwischen 0,05 und 0,5µm. Die Pfropfpolymerisat-Emulsion besitzt einen Feststoffgehalt von 34 Gew.-% und einen mittleren Latexteilchendurchmesser von 0,3 bis 0,4 µm.

### Herstellung von E-1

Die Emulsion des Tetrafluorethylenpolymerisats (Teflon 30 N der Fa. DuPont) wird mit der Emulsion des Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wässrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

### Komponente E-2

Blendex 449: PTFE-Präparat der Firma General Electric Plastics aus 50 Gew.-% PTFE und 50 Gew.-% SAN-Copolymer.

### Komponente E-3

Styrol/Acrylnitril-Copolymerisat mit einem Styrol/Acrylnitril-Verhältnis von 72:28 und einer Grenzviskosität von 0,55 dl/g (Messung in Dimethylformamid bei 20°C).

### Komponente E-4

Phosphitstabilisator

### Komponente E-5

Pentaerythrittetrastearat als Entformungsmittel

### Herstellung und Prüfung der erfindungsgemäßen Formmassen

Das Mischen der Komponenten A bis E erfolgt auf einem 3 1-Innenkneter. Die Formkörper werden auf einer Spritzgießmaschine Typ Arburg 270E bei 240°C hergestellt.

Das Spannungsrissverhalten wird an Stäben der Abmessung 80 x 10 x 4 mm untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung 1,2 bis 2,4 %) und bei Zimmertemperatur 5 Minuten im Testmedium gelagert.

Das Spannungsrissverhalten wird über die Randfaserdehnung beurteilt, die mindestens erforderlich ist, damit der Stab innerhalb der 5-minütigen Expositionszeit im Testmedium bricht.

Die Flammwidrigkeit wird gemäß UL94V bestimmt an Stäben mit einer Dicke von 1,2 mm.

Der Zugmodul wird gemäß ISO 527/DIN 53 457 gemessen.

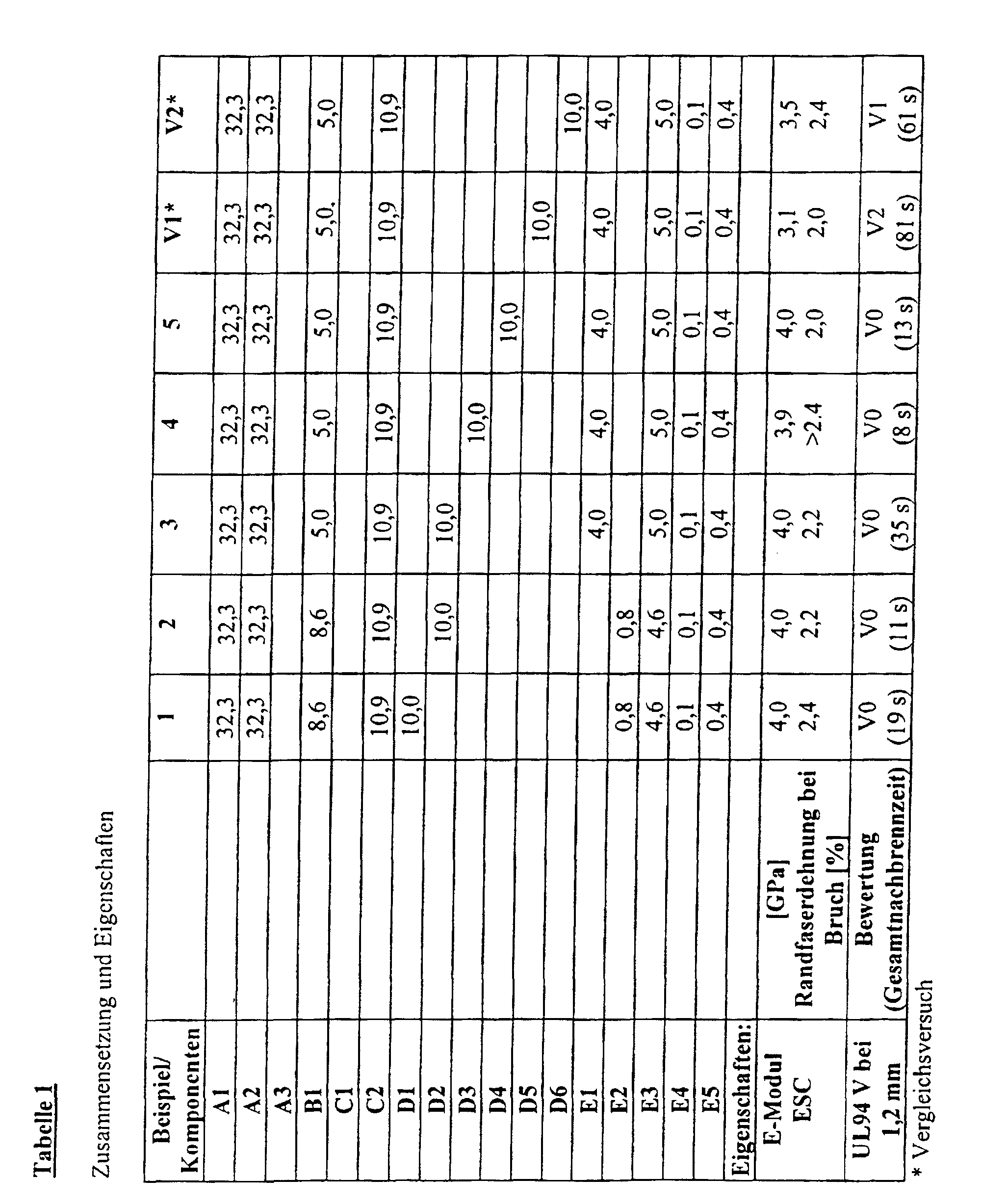

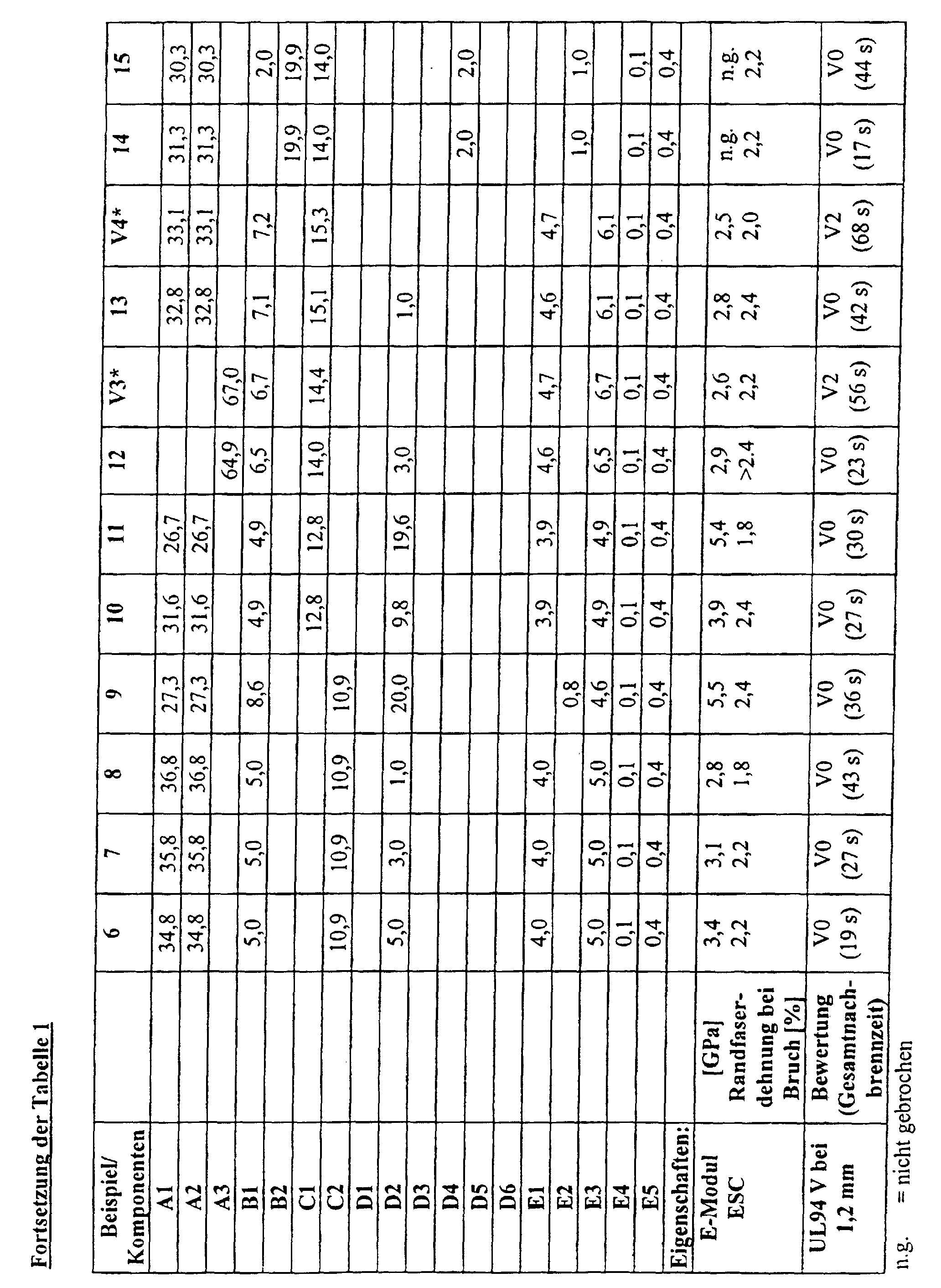

Aus Tabelle 1 geht hervor, dass durch Einsatz hochreiner Talktypen (Beispiele 1-5) eine verbesserte Flammwidrigkeit bei 1,2 mm Wandstärke (verringerte Nachbrennzeiten als auch verringerte Neigung zum Abtropfen), sowie ein höherer E-Modul erzielt wird als bei Einsatz sonstiger Talktypen in gleicher Konzentration (Vergleich 1 und 2). Nur mit hochreinem Talk wird bei 1,2 mm Wandstärke eine V-0-Bewertung im UL94V-Test erzielt. Die Formmassen zeichnen sich des Weiteren durch eine ungewöhnlich gute Spannungsrißbeständigkeit aus. Die Natur des eingesetzten PTFE-Präparats hat dabei einen nur unwesentlichen Einfluß auf diese Eigenschaften (Beispiel 2 und 3). Der Effekt wird mit verschiedenen phosphorhaltigen Flammschutzmitteln gefunden.

Mit zunehmender Talkkonzentration werden innerhalb gewisser Grenzen, die von der jeweiligen Zusammensetzung und der Art des Flammschutzmittels abhängen, die Nachbrennzeiten zuächst zunehmend reduziert (Beispiele 3 und 6-8). Der E-Modul steigt linear mit dem Talkgehalt an, wobei bei hochreinen Talktypen ein E-Modulanstieg von bis zu 0,15 GPa je 1 Gew.-% Talkzusatz erzielt wird, während bei Einsatz sonstiger Talktypen deutlich geringere E-Modulerhöhungen (Vergleich 1 und 2) beobachtet werden.

Bereits bei sehr niedrigen Talkgehalten von z.B. 1 Gew.-% kann in Kombination mit verschiedenen phosphorhaltigen Flammschutzmitteln eine V-0-Bewertung im UL94V-Test bei 1,2 mm Wandstärke und eine deutliche Verbesserung des ESC-Verhaltens realisiert werden (Beispiele 7, 8, 12 und 13). Ein Vergleich von Beispiel 12 mit Vergleich 3 oder von Beispiel 13 mit Vergleich 4 beweist den positiven Einfluß des Talks auf die Flammwidrigkeit (Nachbrennzeit und Abtropfneigung) sowie die auf Spannungsrißbeständigkeit und Steifigkeit der Formmasse. Durch Einsatz kleiner Talkkonzentrationen, z.B. 1-5 Gew.-%, lassen sich Formmassen mit exzellenter Flammwidrigkeit und einem ausgewogenem Verhältnis aus erhöhter Steifigkeit und hoher Zähigkeit sowie sehr gutem ESC-Verhalten herstellen.

Eine V-0-Bewertung im UL94V-Test bei 1,2 mm Wandstärke resultiert in Kombination mit verschiedenen phosphorhaltigen Flammschutzmitteln auch bei hohen Talkgehalten von z.B. 10-20 Gew.-% (z. B. Beispiele 9 und 11). Diese hoch-talkgefüllten Formmassen zeichnen sich durch ihre exzellente Flammwidrigkeit und besonders hohe Steifigkeit bei gleichzeitig überraschend guter Zähigkeit aus.

Bei Verwendung von C. 1 (Bisphenol A-basierendes Phosphat) als Phosphor-haltiges Flammschutzmittel resultiert im Vergleich zum Resorcinol-basierenden Phosphat (C.2) insbesondere bei kleinen Talkgehalten von z.B. kleiner oder gleich 3 Gew.-% ein besonders gutes ESC-Verhalten (Beispiele 7 und 8 bzw. 12 und 13). Jedoch wird auch beim Resorcinol-basierenden Phosphat (C.2) durch Zusatz von Talk eine Verbesserung des ESC-Verhaltens erzielt (Beispiele 7 und 8).

Der beschriebene positive Effekt des speziellen Talks auf die Flammwidrigkeit wird sowohl bei Einsatz nur eines Polycarbonats als auch bei Einsatz einer Mischung mehrerer Polycarbonate unterschiedlicher Lösungsviskosität beobachtet (Beispiele 7, 8, 12 und 13).

Der Effekt wird auch bei Einsatz von Masse-ABS (Beispiel 14) oder aber von Mischungen aus Masse- und Emulsions-ABS (Beispiel 15) als Schlagzähmodifikator beobachtet.

## Patentansprüche

1. Zusammensetzungen enthaltend Polycarbonat, mindestens ein Schlagzähmodifikator, mindestens ein phosphorhaltiges Flammschutzmittel und einen Talk hoher Reinheit, **gekennzeichnet durch** einen MgO-Gehalt von 30,5 bis 32 Gew.-%, einen SiO₂-Gehalt von 60 bis 62,5 Gew.-% und einen Al₂O₃-Gehalt < 0,7 Gew.-%, jeweils bezogen auf den Talk, wobei der Talk zusätzlich **dadurch gekennzeichnet** ist, dass die Talkpartikel mit einem größten Durchmesser von 2,5 µm oder kleiner einen Gew.-Anteil von mindestens 50 % des Talks ausmachen (d₅₀ kleiner oder gleich 2,5 µm).

2. Zusammensetzungen gemäß Anspruch 1 enthaltend 40 bis 98 Gew.-% mindestens eines aromatischen Polycarbonats, 0,5 bis 50 Gew.-% mindestens eines Pfropfpolymerisats, 0,5 bis 40 Gew.-% mindestens eines Phosphor-haltigen Flammschutzmittels und 0,05 bis 40 Gew.-% Talk.

3. Zusammensetzungen gemäß Anspruch 1 enthaltend 45 bis 95 Gew.-% mindestens eines aromatischen Polycarbonats, 1 bis 35 Gew.-% mindestens eines Pfropfpolymerisats, 2 bis 20 Gew.-% mindestens eines Phosphor-haltigen Flammschutzmittels und 0,5 bis 30 Gew.-% Talk.

4. Zusammensetzungen gemäß Anspruch 1 bis 3 enthaltend als Schlagzähmodifikator ein oder mehrere Pfropfpolymerisate von 5 bis 95 Gew.-% wenigstens eines Vinylmonomeren auf 95 bis 5 Gew.-% mindestens einer Pfropfgrundlage mit einer Glastemperatur < 10 °C.

5. Zusammensetzungen gemäß Anspruch 4 enthaltend Pfropfpolymerisate auf der Grundlage von Dien-, EP(D)M-, Acrylat- oder Silikonkautschuken.

6. Zusammensetzungen gemäß Anspruch 4 enthaltend ein Emulsions- oder Masse-ABS oder Mischungen daraus als Schlagzähmodifikator.

7. Zusammensetzungen gemäß Anspruch 1 bis 6 enthaltend mindestens ein Phosphor-haltiges Flammschutzmittel ausgewählt aus den Gruppen der Mono- und Oligo-Phosphorsäure- oder Phosphonsäureester, Phosphonatamine und Phosphazene.

8. Zusammensetzungen gemäß Anspruch 1 bis 7 enthaltend als Flammschutzmittel mindestens eine Phosphorverbindung der allgemeinen Formel (IV) 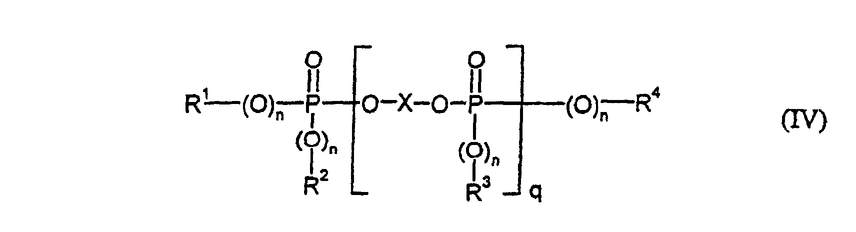 worin
R¹, R², R³ und R⁴ jeweils unabhängig voneinander gegebenenfalls halogeniertes C₁- bis C₈-Alkyl, jeweils gegebenenfalls durch Alkyl und/oder Halogen substituiertes C₅- bis C₆-Cycloalkyl, C₆- bis C₂₀-Aryl oder C₇- bis C₁₂-Aralkyl,
n unabhängig voneinander 0 oder 1,
q 0 bis 30 und
X einen ein- oder mehrkernigen aromatischen Rest mit 6 bis 30 C- Atomen, oder einen linearen oder verzweigten aliphatischen Rest mit 2 bis 30 C-Atomen, der OH-substituiert sein und bis zu 8 Etherbindungen enthalten kann, bedeuten.

9. Zusammensetzungen gemäß Anspruch 1 bis 8 enthaltend als Flasnmschutzmittel mindestens eine Verbindung der Formel 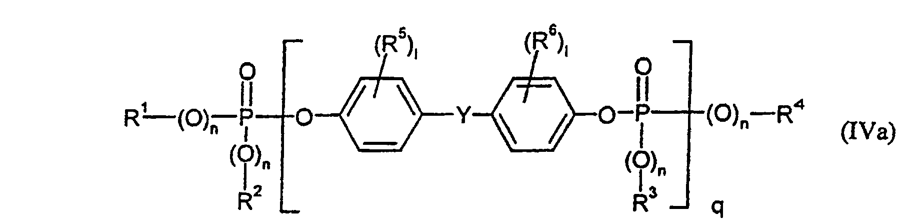 worin
R¹, R², R³ und R⁴ jeweils unabhängig voneinander C₁-C₈-Alkyl und/oder gegebenenfalls durch Alkyl substituiertes C₅-C₆-Cycloalkyl, C₆-C₁₀-Aryl oder C₇-C₁₂-Aralkyl,
n unabhängig voneinander 0 oder 1,
l unabhängig voneinander 0, 1, 2, 3 oder 4,
q 0,3 bis 20,
R⁵ und R⁶ unabhängig voneinander C₁-C₄-Alkyl, und
Y C₁-C₇-Alkyliden, C₁-C₇-Alkylen, C₅-C₁₂-Cycloalkylen, C₅-C₁₂-Cycloalkyliden, -O-, -S-, -SO-, SO₂ oder -CO- bedeuten.

10. Zusammensetzungen gemäß Anspruch 1 bis 9 enthaltend als Flammschutzmittel eine Verbindung der Formel 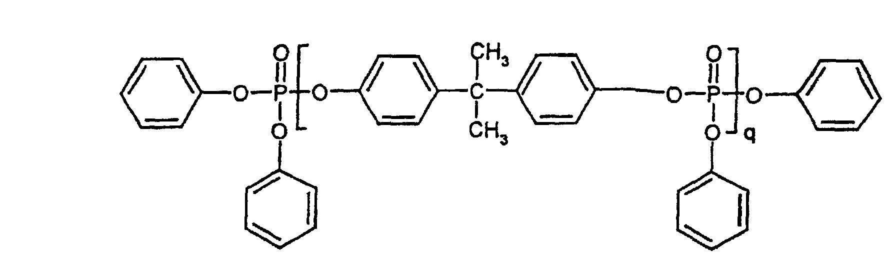 mit q von 0,3 bis 10.

11. Zusammensetzungen gemäß Anspruch 1 bis 10 enthaltend Vinyl(co)polymerisate, Polyalkylenterephthalate oder Mischungen daraus.

12. Zusammensetzungen gemäß Anspruch 11 enthaltend bis zu 30 Gew.-%, bezogen auf die Gesamtzusammensetzung, eines Vinyl(co)polyrnerisats.

13. Zusammensetzungen gemäß Anspruch 1 bis 12 enthaltend weitere handelsübliche Additive, wie z.B. Antitropfmittel, Gleit- und Entformungsmittel, Nukleirmittel, Antistatika, Stabilisatoren, Farbstoffe und Pigmente sowie von Talk verschiedene Füll- und Verstärkungsstoffe.

14. Zusammensetzungen gemäß Anspruch 1 bis 13 enthaltend als Antitropfinittel ein fluoriertes Polyolefin, gegebenenfalls eingesetzt als Koagulat, Präcompound oder Masterbatch mit einem Pfropfpolymerisat gemäß Anspruch 6 oder einem Vinyl(co)polymerisat.

15. Polycarbonatzusammensetzungen enthaltend 50 bis 90 Gew.-% mindestens eines aromatischen Polycarbonats, 1,5 bis 25 Gew.-% mindestens eines Pfropfpolymerisat gemäß Anspruch 6, 2 bis 20 Gew.-% mindestens eines Flammschutzmittels gemäß Anspruch 9, 0 bis 20 Gew.-% eines Vinyl(co)-polymerisats, und 1 bis 20 Gew.-% eines Talks gemäß der Definition in Anspruch 1, wobei die Summe der Komponenten 100 ergibt.

16. Polycarbonatzusammensetzungen enthaltend 50 bis 90 Gew.-% mindestens eines aromatischen Polycarbonats, 1,5 bis 25 Gew.-% mindestens eines Pfropfpolymerisat gemäß Anspruch 6, 2 bis 20 Gew.-% mindestens eines Flammschutzmittels gemäß Anspruch 10, 0 bis 20 Gew.-% eines Vinyl(co)-polymerisats, und 1 bis 20 Gew.-% eines Talks gemäß der Definition in Anspruch 1, wobei die Summe der Komponenten 100 ergibt.

17. Polycarbonatzusammensetzungen gemäß einem oder mehreren der vorhergehenden Ansprüche, **dadurch gekennzeichnet, dass** sie den UL94V-Test mit V-0 bei einer Wandstärke kleiner oder gleich 1,5 mm bestehen.

18. Verfahren zur Herstellung der Polycarbonatzusammensetzungen gemäß Anspruch 1, wobei die einzelnen Komponenten gemischt und bei erhöhter Temperatur compoundiert werden.

19. Verwendung der Polycarbonatzusammensetzungen gemäß einem oder mehreren der vorhergehenden Ansprüche, zur Herstellung von Formkörpem bzw. Formteilen jeglicher Art.

20. Formkörper bzw. Formteile, erhältlich aus den Polycarbonatzusammensetzungen gemäß einem oder mehreren der vorhergehenden Ansprüche.

## Claims

1. Compositions containing polycarbonate, at least one impact modifier, at least one phosphorus-containing flameproofing agent, and a talc of high purity, **characterised by** an MgO content of from 30.5 to 32 wt.%, an SiO₂ content of from 60 to 62 . 5 wt . % and an Al₂O₃ content of < 0.7 wt.%, in each case based on the talc, wherein the talc is additionally **characterised in that** the talc particles having a largest diameter of 2.5 µm or less make up an amount by weight of at least 50 % of the talc (d₅₀ less than or equal to 2.5 µm).

2. Compositions according to claim 1 containing from 40 to 98 wt.% of at least one aromatic polycarbonate, from 0.5 to 50 wt.% of at least one graft polymer, from 0.5 to 40 wt.% of at least one phosphorus-containing flameproofing agent, and from 0.05 to 40 wt.% of talc.

3. Compositions according to claim 1 containing from 45 to 95 wt.% of at least one aromatic polycarbonate, from 1 to 35 wt.% of at least one graft polymer, from 2 to 20 wt.% of at least one phosphorus-containing flameproofing agent, and from 0.5 to 30 wt.% of talc.

4. Compositions according to claim 1 to 3 containing as impact modifier one or more graft polymers of from 5 to 95 wt.% of at least one vinyl monomer with from 95 to 5 wt.% of at least one graft base,having a glass transition temperature < 10°C.

5. Compositions according to claim 4 containing graft polymers based on diene, EP(D)M, acrylate or silicone rubbers.

6. Compositions according to claim 4 containing an emulsion or mass ABS or mixtures thereof as impact modifier.

7. Compositions according to claim 1 to 6 containing at least one phosphorus-containing flameproofing agent selected from the groups of the mono- and oligophosphoric acid or phosphonic acid esters, phosphonate amines and phosphazenes.

8. Compositions according to claim 1 to 7 containing as flameproofing agent at least one phosphorus compound of the general formula (IV) 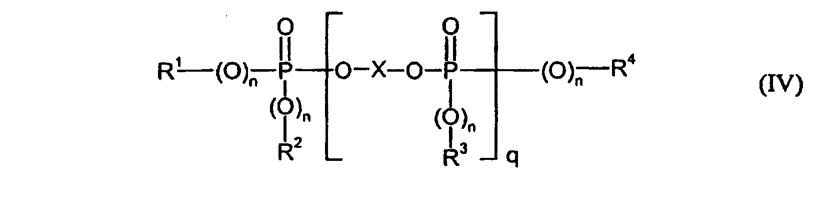 wherein
R¹, R², R³ and R⁴ are each independently of the others optionally halogenated C₁- to C₈-alkyl, or C₅- to C₆-cycloalkyl, C₆- to C₂₀-aryl or C₇- to C₁₂-aralkyl each optionally substituted by alkyl and/or by halogen, the substituents n are each independently of the others 0 or 1,
q represents from 0 to 30, and
X represents a mono- or poly-nuclear aromatic radical having from 6 to 30 carbon atoms, or a linear or branched aliphatic radical having from 2 to 30 carbon atoms which may be OH-substituted and contain up to 8 ether bonds.

9. Compositions according to claim 1 to 8 containing as flameproofing agent at least one compound of the formula 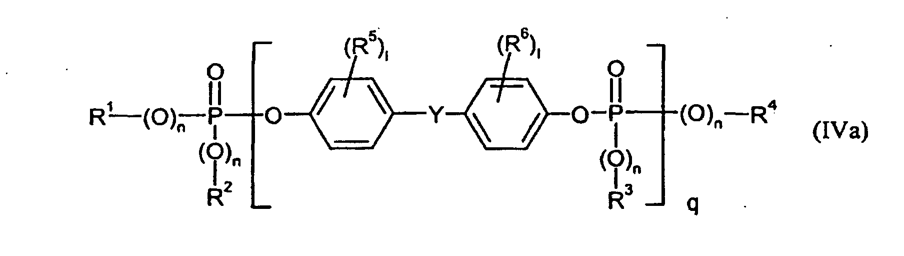 wherein
R¹, R², R³ and R⁴ are each independently of the others C₁-C₈-alkyl and/or optionally alkyl-substituted C₅-C₆-cycloalkyl, C₆-C₁₀-aryl or C₇-C₁₂-aralkyl,
the substituents n are each independently of the others 0 or 1,
the substituents 1 are each independently of the other 0, 1, 2, 3 or 4,
q represents from 0.3 to 20,
R⁵ and R⁶ are each independently of the other C₁-C₄ -alkyl, and
Y represents C₁-C₇-alkylidene, C₁-C₇-alkylene, C₅-C₁₂-cycloalkylene, C₅-C₁₂-cycloalkylidene, -O-, -S-, -SO-, SO₂ or -CO-.

10. Compositions according to claim 1 to 9 containing as flameproofing agent a compound of the formula 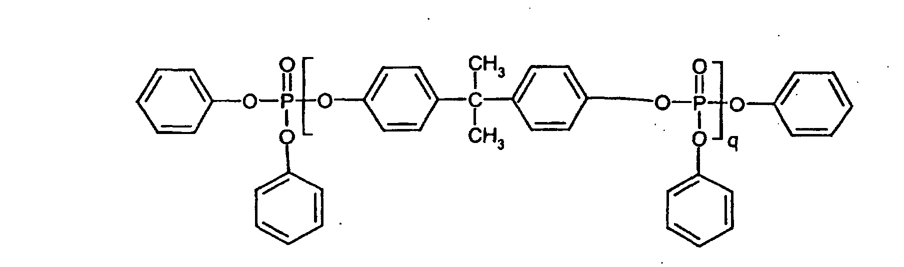 wherein q is from 0.3 to 10.

11. Compositions according to claim 1 to 10 containing vinyl (co)polymers, polyalkylene terephthalates or mixtures thereof.

12. Compositions according to claim 11 containing up to 30 wt.%, based on the total composition, of a vinyl (co)polymer.

13. Compositions according to claim 1 to 12 containing further commercially available additives, such as, for example, anti-dripping agents, lubricants and mould-release agents, nucleating agents, antistatics, stabilisers, colourings and pigments as well as fillers and reinforcing agents other than talc.

14. Compositions according to claim 1 to 13 containing as anti-dripping agent a fluorinated polyolefin, optionally used in the form of a coagulate, precompound or masterbatch with a graft polymer according to claim 6 or with a vinyl (co)polymer.

15. Polycarbonate compositions containing from 50 to 90 wt.% of at least one aromatic polycarbonate, from 1.5 to 25 wt.% of at least one graft polymer according to claim 6, from 2 to 20 wt.% of at least one flameproofing agent according to claim 9, from 0 to 20 wt.% of a vinyl (co)polymer, and from 1 to 20 wt.% of a talc according to the definition in claim 1, the sum of the components being 100.

16. Polycarbonate compositions containing from 50 to 90 wt.% of at least one aromatic polycarbonate, from 1.5 to 25 wt.% of at least one graft polymer according to claim 6, from 2 to 20 wt.% of at least one flameproofing agent according to claim 10, from 0 to 20 wt.% of a vinyl (co)polymer, and from 1 to 20 wt.% of a talc according to the definition in claim 1, the sum of the components being 100.

17. Polycarbonate compositions according to one or more of the preceding claims, **characterised in that** they pass the UL94V test with V-0 at a wall thickness less than or equal to 1.5 mm.

18. Process for the preparation of the polycarbonate compositions according to claim 1, wherein the individual components are mixed and compounded at elevated temperature.

19. Use of the polycarbonate compositions according to one or more of the preceding claims in the production of moulded bodies and mouldings of any kind.

20. Moulded bodies and mouldings obtainable from the polycarbonate compositions according to one or more of the preceding claims.

## Revendications

1. Compositions contenant du polycarbonate, au moins un agent modifiant la résistance aux chocs, au moins un agent ignifuge phosphoré et un talc de pureté élevée, **caractérisées par** un taux de MgO de 30,5 à 32 % en poids, un taux de SiO₂ de 60 à 62,5 % en poids et un taux de Al₂O₃ < 0,7 % en poids, rapportés respectivement au talc, le talc étant par ailleurs **caractérisé en ce que** les particules de talc d'un diamètre maximal de 2,5 µm ou moins représentent une part en poids d'au moins 50% du talc (d₅₀ inférieur ou égal à 2,5 µm).

2. Compositions conformément à la revendication 1, contenant 40 à 98 % en poids d'au moins un polycarbonate aromatique, 0,5 à 50% en poids d'au moins un polymère greffé, 0,5 à 40% en poids d'au moins un agent ignifuge phosphoré et 0,05 à 40% en poids de talc.

3. Compositions conformément à la revendication 1 contenant 45 à 95% en poids d'au moins un polycarbonate aromatique, 1 à 35 % en poids d'au moins un polymère greffé, 2 à 20% en poids d'au moins un agent ignifuge phosphoré et 0,5 à 30 % en poids de talc.

4. Compositions conformément à l'une des revendications 1 à 3 contenant comme agent modifiant la résistance aux chocs un ou plusieurs polymères greffés de 5 à 95% en poids d'au moins un monomère vinylique sur 95 à 5 % en poids d'au moins une base de greffage d'une température de vitrification < 10°C.

5. Compositions conformément à la revendication 4 contenant des polymères greffés sur une base de caoutchoucs de diène, d'EP(D)M, d'acrylate ou de silicone.

6. Compositions conformément à la revendication 4 contenant un ABS en émulsion ou en masse ou des mélanges de ceux-ci comme agent modifiant la résistance aux chocs.

7. Compositions conformément à l'une des revendications 1 à 6, contenant au moins un agent ignifuge phosphoré choisi dans le groupe des esters d'acide monophosphorique et oligophosphorique ou phosphonique, des amines de phosphonate et des phosphazènes.

8. Compositions conformément à l'une des revendications 1 à 7 contenant comme agent ignifuge au moins un composé phosphoré de formule générale (IV) 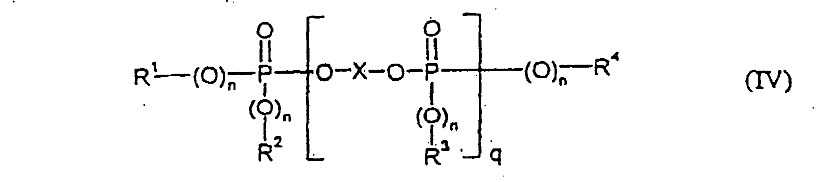 dans laquelle
R¹, R², R³ et R⁴ désignent respectivement, indépendamment l'un de l'autre, un radical alkyle C₁ à C₈ éventuellement halogéné, un radical cycloalkyle C₅ à C₆, aryle C₆ à C₂₀ ou aralkyle C₇ à C₁₂ respectivement substitué éventuellement par un radical alkyle et/ou un halogène,
n 0 ou 1, indépendamment l'un de l'autre
q 0 à 30 et
X un radical aromatique à un ou plusieurs noyaux avec 6 à 30 atomes C ou un radical aliphatique linéaire ou ramifié avec 2 à 30 atomes C qui peut être OH-substitué et contenir jusqu'à 8 liaisons éther.

9. Compositions conformément à l'une des revendications 1 à 8 contenant comme agent ignifuge au moins un composé de formule 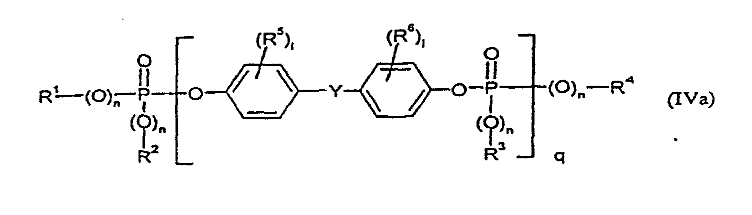 dans laquelle
R¹, R², R³ et R⁴ désignent respectivement, indépendamment l'un de l'autre, un radical alkyle C₁ à C₈ et/ou un radical cycloalkyle C₅-C₆, aryle C₆-C₁₀ ou aralkyle C₇-C₁₂ substitué éventuellement par un radical alkyle,
n 0 ou 1, indépendamment l'un de l'autre
I 0, 1, 2, 3 ou 4, indépendamment l'un de l'autre
q 0,3 à 20 et
R⁵ et R⁶ un radical alkyle C₁-C₄ indépendamment l'un de l'autre et
Y un radical alkylidène C₁-C₇, alkylène C₁-C₇, cycloalkylène C₅-C₁₂, cycloalkylidène C₅-C₁₂, -O-, -S-, -SO-, SO₂ ou -CO-.

10. Compositions conformément à l'une des revendications 1 à 9 contenant comme agent ignifuge au moins un composé de formule 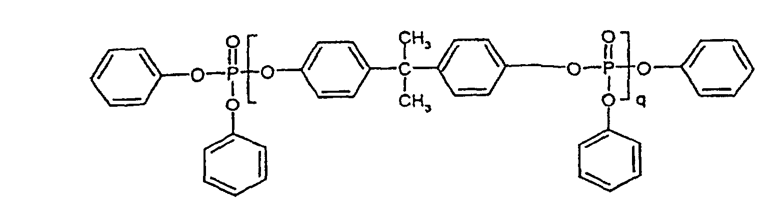 avec q de 0,3 à 10.

11. Compositions conformément à l'une des revendications 1 à 10 contenant des (co)polymères de vinyle, des téréphtalates de polyalkylène ou des mélanges de ceux-ci.

12. Compositions conformément à la revendication 11 contenant jusqu'à 30% en poids d'un (co)polymère de vinyle par rapport à la composition totale.

13. Compositions conformément à l'une des revendications 1 à 12 contenant d'autres additifs du commerce comme, par exemple, des agents anti-gouttes, des lubrifiants et agents démoulants, des agents de nucléation, des antistatiques, des stabilisateurs, des colorants et pigments ainsi que d'autres renforçateurs et charges que le talc.

14. Compositions conformément à l'une des revendications 1 à 13 contenant comme agent anti-gouttes une polyoléfine fluorée, éventuellement utilisée comme produit coagulé, precompound ou masterbatch avec un polymère greffé conformément à la revendication 6 ou un (co-)polymère vinylique.

15. Compositions de polycarbonate contenant 50 à 90% en poids d'au moins un polycarbonate aromatique, 1,5 à 25% en poids d'au moins un polymère greffé conformément à la revendication 6, 2 à 20% en poids d'au moins un agent ignifuge conformément à la revendication 9, 0 à 20% en, poids d'un (co-)polymère vinylique et 1 à 20% en poids d'un talc conformément à la définition dans la revendication 1, la somme des composants totalisant 100.

16. Compositions de polycarbonate contenant 50 à 90% en poids d'au moins un polycarbonate aromatique, 1,5 à 25% en poids d'au moins un polymère greffé conformément à la revendication 6, 2 à 20% en poids d'au moins un agent ignifuge conformément à la revendication 10, 0 à 20% en poids d'un (co-)polymère vinylique et 1 à 20% en poids d'un talc conformément à la définition de la revendication 1, la somme des composants totalisant 200%.

17. Compositions de polycarbonate conformément à une ou plusieurs des revendications précédentes **caractérisées en ce qu'**elles passent le test ULV94 avec V-0 à une épaisseur de paroi inférieure ou égale à 1,5 mm.

18. Procédé de fabrication de compositions de polycarbonate conformément à la revendication 1, les différents composants étant mélangés et composés à une température élevée.

19. Mise en oeuvre des compositions de polycarbonate conformément à une ou plusieurs des revendications précédentes pour la fabrication de corps moulés ou pièces moulées de toute nature.

20. Corps moulés ou pièces moulées obtenus à partir des compositions de polycarbonate conformément à une ou plusieurs des revendications précédentes.
